# EUROPEAN PATENT APPLICATION

(11) **EP 4 360 447 A1**
(43) Date of publication of application: **01.05.2024**
(21) Application number: 22203624.6
(22) Date of filing: 25.10.2022
(51) Int. Cl.: A01G 9/02, A01G 27/04, E04H 13/00

(54) **IRRIGATION SYSTEM**

(71) Applicant: Zehnder, Anja, 72379 Hechingen (DE)
(72) Inventor: Zehnder, Anja, 72379 Hechingen (DE); Zehnder, Hans, 72160 Horb am Neckar (DE)
(74) Representative: Meyer zu Bexten, Elmar

(57) **Abstract**

**Problem**

The laborious and periodic replanting of seasonal vegetation - as is common with today's rural or garden cemeteries - imposes enormous strain on the back of the gardener in charge of a grave, possibly affecting his or her long-term health. Furthermore, landscape workers are exposed to all kinds of weather while greening and irrigating the gravesite. Even then, a risk of dehydration or overwatering of the vegetation remains.

When reverting to known apparatus, several weeks of manual watering are usually required until automation can be achieved. Moreover, due to their subsequent constant irrigation, plants are in jeopardy of searing or burning during dry season. Likewise, when introducing water through the supply pipe, there is no indication of water level; hence gardeners must refill sufficient volume to err on the side of caution, running a high risk of water being irretrievably lost via the outlet or overflow pipe. Finally, the cement basin contributes to extensive soil sealing.

**Solution**

Apparatus for greening a gravesite, comprising
a waterproof trough, such as from plastic or coated sheet metal, for retaining water, characterized in
an interchangeable insert containing a substrate, such as expanded clay aggregate, for supporting vegetation and a subjacent drainage layer, such as of natural moss, for draining and filtering the water having percolated through the substrate,
a pump arranged underneath the drainage layer for siphoning the water from the trough into the insert,
a moisture sensor for activating the pump when the substrate dries out, and
a water level sensor for signaling shortages of the water retained within the trough.

## Description

### Technical Field

The invention pertains to the product and processes as per the first portion of the independent claims.

### Background Art

PTL1 relates to a receptacle for cultivating and preserving plants especially adapted and designed for use in cemeteries and intended to be set into the earth (so as to come flush or level with the top surface thereof) and to be placed directly over the grave containing the casket and rest on top of the earth which has just been placed on said casket. The receptacle consists of an upper chamber or compartment, adapted to receive the bed of earth in which the plants are grown and cultivated, and a lower compartment or basin, which receives and holds a supply of water used to nurture the plants automatically.

NPL1 gives an account of the state of the art in automatic irrigation technology.

### Summary of invention

The invention as claimed is hereinafter disclosed in such a way that the technical problem with which it deals can be appreciated and the solution can be understood.

### Technical Problem

The laborious and periodic replanting of seasonal vegetation - as is common with today's rural or garden cemeteries - imposes enormous strain on the back of the gardener in charge of a grave, possibly affecting his or her long-term health. Furthermore, landscape workers are exposed to all kinds of weather while greening and irrigating the gravesite. Even then, a risk of dehydration or overwatering of the vegetation remains.

When reverting to known apparatus such as disclosed in PTL1, several weeks of manual watering are usually required until automation can be achieved. Moreover, due to their subsequent constant irrigation, plants are in jeopardy of searing or burning during dry season. Likewise, when introducing water through the supply pipe, there is no indication of water level; hence gardeners must refill sufficient volume to err on the side of caution, running a high risk of water being irretrievably lost via the outlet or overflow pipe. Finally, the cement basin contributes to extensive soil sealing.

### Solution to Problem

The problem is solved as per the second portion of Claim 1.

### Advantageous effect of invention

The invention sustainably resolves municipal water supply and distribution issues arising within cemeteries, potentially saving millions of liters of precious and expensive drinking water every year. At the same time, use of the proposed apparatus may help develop flourishing grounds and natural habitat by using standard substrates and a natural drainage layer.

For added comfort, the removable insert may be replanted indoors at a convenient height, greatly alleviating strain-induced health issues. Further, thanks to its modular design, the device's trough accommodates an ample water supply in a comparatively shallow installation space while allowing for easy frost and theft protection. Finally, its self-cleaning, rugged, and recyclable components lend the apparatus an advantageous longevity.

### Description of embodiments

An exemplary apparatus for greening a gravesite comprises a waterproof trough, insert, pump, and sensors for each moisture and water level. Once lowered into the gravesite using a leveling aid, the trough, consisting of plastic or sheet metal, retains precipitation as well as irrigation water whereas the insert contains a substrate such as expanded clay aggregate that supports the vegetation to be irrigated.

Upon planting the insert with the desired vegetation using a mesh or grid, a gardener may lower it into the stationary trough such that the latter forms a double wall around the insert. At his or her client's discretion, the gardener may seasonally exchange or remove the insert for replanting.

Subjacent the substrate, the insert contains a layer of natural moss that drains and filters any water having percolated through the clay. Arranged underneath this drainage layer, the apparatus' pump is activated by the moisture sensor when the substrate threatens to dry out. In that event, water from the trough is siphoned into the insert by the pump and emitted into the substrate through a pressure-compensated drip tube. It is well understood that, without departing from the scope of the invention, the pump may be configurable such that it operates exclusively during evening hours.

The water level sensor signals any shortages of the water retained within the trough itself, in which case the latter may be refilled from aboveground through an adjustable inlet. As soon as the water reaches its maximum level, the water level sensor acoustically signals to the gardener that replenishment is complete. Nonetheless, an overflow is provided to divert excessive water from the through in case of heavy rainfall.

Additional sensors could optionally measure nutrient content of the substrate for on-demand fertilization.

In a preferred embodiment, a grave lantern or other light fixture mounted atop the gravesite supports a photovoltaic cell to power the pump, any excessive energy being temporarily stored by a rechargeable battery.

Optionally, the apparatus may be equipped to prevent icing and freezing of the vegetation as well as the installation itself. For instance, all irrigation tubes could be purged with air to avoid frost damage, or a spray mist system, as is known from vinicultural facilities, could protect sensitive plants.

The skilled will appreciate that while the apparatus as per the invention was primarily designed for watering gravesites, it may equally be applied to the irrigation of plant bowls and boxes for cemeteries, communities, patios, doorways, balconies as well as in-ground or raised garden beds. In such applications, the trough and insert may be arranged conveniently above ground. Moreover, it is not mandatory that the trough's water reservoir be positioned directly below the insert; instead, the water pool could be laterally displaced from the insert.

### Industrial applicability

The invention is applicable, inter alia, throughout the urban gardening and gardening equipment industry.

### Citation list

The following documents are cited hereinbefore.

### Patent literature

PTL1: US 665502 A (BOGGS ALDEN B [US]) 08.01.1901

### Non-patent literature

NPL1: ROMERO, R., et al. Research on automatic irrigation control: State of the art and recent results. Agricultural water management. 2012, vol.114, p.59-66.

## Claims

1. Apparatus for greening a gravesite, comprising
a waterproof trough, such as from plastic or coated sheet metal, for retaining water,
**characterized in**
an interchangeable insert containing a substrate, such as expanded clay aggregate, for supporting vegetation and a subjacent drainage layer, such as of natural moss, for draining and filtering the water having percolated through the substrate,
a pump arranged underneath the drainage layer for siphoning the water from the trough into the insert,
a moisture sensor for activating the pump when the substrate dries out, and a water level sensor for signaling shortages of the water retained within the trough.

2. Apparatus as per Claim 1, further comprising
a photovoltaic cell for mounting atop the gravesite and supplying the pump with electric energy.

3. Apparatus as per Claim 2, further comprising
a light fixture, such as a grave lantern, supporting the photovoltaic cell.

4. Apparatus as per Claim 2 or Claim 3, further comprising
a rechargeable battery, wired to both the pump and photovoltaic cell, for temporarily storing the energy.

5. Apparatus as per any of the preceding claims, further comprising
a preferably pressure-compensated drip tube in fluid communication with the pump for emitting the siphoned water into the substrate.

6. Apparatus as per any of the preceding claims, further comprising
an overflow for diverting the water from the through as required, such as in case of heavy rainfall.

7. Apparatus as per any of the preceding claims wherein
the pump is configured such that the activation occurs during evening hours.

8. Apparatus as per any of the preceding claims wherein
the trough is arranged below, besides, or around the insert, such as in the form of a double wall.

9. Apparatus as per any of the preceding claims, further comprising
a preferably adjustable inlet for refilling the trough from aboveground, wherein the water level sensor is further configured to signal, preferably acoustically, a maximum level of the water retained within the trough.

10. Process of assembling an apparatus as per any of the preceding claims,
**characterized in**
planting the insert, preferably using a mesh or grid, with the vegetation, lowering the trough, preferably using a leveling aid, into the gravesite, and inserting the insert into the trough.

11. Use of an apparatus as per Claim 9, **characterized in**
during the shortages, replenishing the water by irrigating the gravesite or using the inlet and
seasonally removing, replanting, and reinserting the insert.
